# EUROPEAN PATENT APPLICATION

(11) **EP 2 087 980 A1**
(43) Date of publication of application: **12.08.2009**
(21) Application number: 09460001.2
(22) Date of filing: 14.01.2009
(51) Int. Cl.: B29B 17/00

(54) **Method for the manufacture of thermal insulation boards**

(30) Priority: 16.01.2008 PL 38427108
(71) Applicant: Instytut Mechanizacji Budownictwa I Gornictwa Skalnego, 02-673 Warszawa (PL); Osrodek Badawczo-Rozwojowy Przemyslu Plyt Drewnopochodnych Spolka Z O.O., 83-262 Czarna Woda (PL); Eko-Utyl Spolka Z O.O., 42-580 Wojkowice (PL)
(72) Inventor: The designation of the inventor has not yet been filed
(74) Representative: Maslowski, Andrzej

(57) **Abstract**

Method for the manufacture of thermal insulation boards with the addition of polyurethane foam waste and thermoplastics waste is **characterised in that** the polyurethane foam waste and thermoplastics waste is comminuted using a known comminuting means until grains of 2 to 8 mm in diameter are obtained, after which a blend containing 40 to 85% of polyurethane foam grains and 10 to 60% of thermoplastics waste grains is prepared and preferably combined with up to 15% by weight of synthetic and natural fibres and with up to 8% by weight of coherence-improving agents, such blend being then moulded in a known manner by pressing in moulds to form boards of desired geometrical dimensions, and the said boards being then pressed in a press at a temperature of more than 150°C in order to cure them, and finally the edges of the boards being trimmed using known means for mechanical working.

## Description

This invention relates to a method of manufacture of thermal insulation boards, particularly for the building industry, with use being made of waste rigid polyurethane foam or waste thermoplastics.

Polish patent application P 293307 describes a method of manufacture of heat insulation boards from waste polyurethane foam designed for various refrigerating and heating appliances, the said method consisting in comminuting waste, particularly polyurethane foam, into grains of various sizes, followed by coating with a binder of a mixture of water glass and curing additives, creating a mix used afterwards to form blocks or other shaped elements, which harden upon seasoning and form a material for further processing by cladding with gypsum boards, chipboards, fibreboards or steel sheet, as required by intended use.

The method presented in the said patent application is expensive and is suitable mainly for the manufacture of thermal insulation boards for refrigerating and heating appliances.

The object of this invention is to provide a method for the manufacture of thermal insulation boards using waste rigid polyurethane foam and waste thermoplastics, enabling the production of low-cost thermal insulation boards for the building industry, wherein the boards manufactured by this method would meet all requirements imposed on thermal insulation materials used in the building industry.

The task presented was fulfilled by applying a solution having the important features of the invention, wherein the method for the manufacture of thermal insulation boards is characterised in that the polyurethane foam and thermoplastics waste is comminuted using a known comminuting means until grains of 2 to 8 mm in diameter are obtained, after which a blend containing 40 to 85% of polyurethane foam grains and 10 to 60% of thermoplastics waste grains is prepared and preferably combined with up to 15% by weight of synthetic and natural fibres and with up to 8% by weight of coherence-improving agents, such blend being then moulded in a known manner by pressing in moulds to form boards of desired geometrical dimensions, and the said boards being then pressed in a press at a temperature of more than 150°C in order to cure them, and finally the edges of the boards being trimmed using known means for mechanical working.
In the preferable embodiment of the method for the manufacture of thermal insulation boards, the mixture to be further processed in the way described above, consists only of thermoplastics waste, polyurethane foam waste and coherence-improving agent, wherein the content of the thermoplastics waste is about 35% by weight, the content of the polyurethane foam waste is about 60% by weight, and the content of the coherence-improving agent is about 5%.
In the said preferable embodiment of the method, the coherence-improving agent used is a urea-formaldehyde resin or a melamine-urea-formaldehyde resin.
In the said preferable embodiment of the method, the thermoplastics waste used is thermoplastic packaging waste and thermoplastic fibre waste.

The application of the method having the important features of the invention enables manufacture for the building industry of thermal insulation boards of various shapes, which may be used for thermal insulation of floors and ceilings, and flat roofs in particular. The boards obtained by the method described may be produced with grooves to accommodate underfloor heating conduits or in the form of boards for cladding panels and cassettes. Boards obtained by the method described, which is the essence of the invention, feature high resistance to biological agents, high water vapour permeability, resistance to deteriorating and decaying agents and improved mechanical resistance.

An example embodiment of the invention is presented in more detail as the preferred variation of the method for the manufacture of thermal insulation boards, wherein the mixture to be further processed consists only of thermoplastics waste, polyurethane foam waste and coherence-improving agent, which is illustrated in the diagram.
In the method presented and illustrated in the diagram the mixture used for the manufacture of thermal insulation boards consists of comminuted thermoplastic packaging waste and thermoplastic fibre waste, polyurethane foam waste, and coherence-improving agent in the form of urea-formaldehyde resin, in the following weight proportions: 35% thermoplastic packaging and thermoplastic fibre, 65% polyurethane foam waste, and 5% urea-formaldehyde resin. Upon comminuting the waste to grains ca. 3 mm in diameter and blending it in a mixing vessel with the urea-formaldehyde resin, the mixture obtained is transferred to a mould the interior of which has the shape of the board with dimensions corresponding to those of the finished product. The mixture in the mould is cold-pressed and after removal from the mould it is pressed in a temperature of >150°C. The board is then worked mechanically to even up its surface, after which the board constitutes a product that is usable, for instance, in the building industry.

The method for the manufacture of thermal insulation boards disclosed in the example embodiment of the invention does not represent all possible variations thereof. This detailed description of one of the preferred embodiments of the invention is not intended to limit the scope of the invention in any way. It will be understood by those having skill in the art that changes can be made to this specific embodiment without departing from the spirit and scope of the invention.

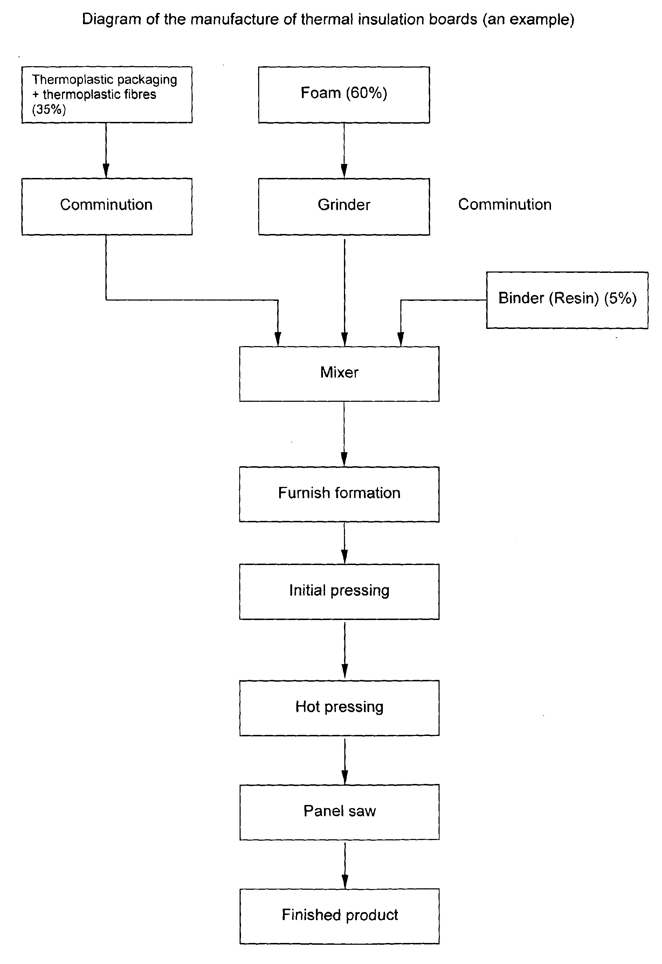

## Claims

1. Method for the manufacture of thermal insulation boards with the use of polyurethane foam waste and thermoplastics waste, **characterised in that** the polyurethane foam and thermoplastics waste is comminuted using a known comminuting means until grains of 2 to 8 mm in diameter are obtained, after which a blend containing 40 to 85% of polyurethane foam grains and 10 to 60% of thermoplastics waste grains is prepared and preferably combined with up to 15% by weight of synthetic and natural fibres and with up to 8% by weight of coherence-improving agents, such blend being then moulded in a known manner by pressing in moulds to form boards of desired geometrical dimensions, and the said boards being then pressed in a press at a temperature of more than 150°C in order to cure them, and finally the edges of the boards being trimmed using known means for mechanical working.

2. Method for the manufacture of thermal insulation boards according to claim 1, **characterised in that** the blend for further processing preferably consists only of thermoplastics waste, polyurethane foam waste and coherence-improving agent, wherein the thermoplastics waste content is about 35% by weight, the polyurethane foam waste content is about 60% by weight, and the coherence-improving agent content is about 5% by weight.

3. Method for the manufacture of thermal insulation boards according to claim 1 or claim 2, **characterised in that** the coherence-improving agent is preferably a urea-formaldehyde resin.

4. Method for the manufacture of thermal insulation boards according to claim 1 or claim 2, **characterised in that** the coherence-improving agent is preferably a melamine-urea-formaldehyde resin.

5. Method for the manufacture of thermal insulation boards according to claim 1 or claim 2, **characterised in that** the thermoplastics waste is preferably thermoplastic packaging waste.
